# EUROPEAN PATENT APPLICATION

(11) **EP 1 067 638 A1**
(43) Date of publication of application: **10.01.2001**
(21) Application number: 00305742.9
(22) Date of filing: 07.07.2000
(51) Int. Cl.: H01S 3/00

(54) **Method and apparatus for passively compressing an optical pulse in an optical transmission system**

(30) Priority: 09.07.1999 US 350132
(71) Applicant: Optical Technologies U.S.A. Corp., Dover, DE 19901 (US)
(72) Inventor: Saunders, Ross Alexander, Fife, Scotland KY11 5BB (GB)
(74) Representative: Abbie, Andrew Kenneth

(57) **Abstract**

An embodiment includes an optical source, a dispersive element and a passive optical compression device. A transform-limited optical pulse is generated by the optical source. The optical pulse is then provided to the passive optical compression device. The passive optical compression device, typically using a passive optical notch filter, has a significant amplitude response to filter or spectrally shape the optical pulse as the pulse passes through the device. As the optical pulse's frequency bandwidth increases due to the filtering, the optical pulse's temporal pulse width is reduced or compressed down to a desired narrow pulse width without the use of control signals or high-speed electro-optics.

## Description

### BACKGROUND OF THE INVENTION

The present invention generally relates to systems for passively compressing an optical pulse, and more specifically, to systems for passively compressing a temporal pulse width of an optical pulse using a passive optical notch filter within an optical transmission system.

The increasing speed of optical transmission systems has led to the desire for narrower optical pulses. As optical pulses become narrower, more data can be transmitted through the system. For example, in common return-to-zero coding formats, the temporal pulse width of the optical pulse is less than the data bit period. This means that a temporal pulse width of less than 100 picoseconds is required for a system having a common 10Gbit/second data rate. If the system needs to operate at a higher speed, such as 100Gbit/second, then the temporal pulse width should be less than 10 picoseconds.

To address the problem of generating narrow pulses in optical transmission systems, a variety of methods for pulse compression have been employed. These methods typically use active devices to compress the optical pulse to an acceptable temporal pulse width. Active components are often required in these techniques to align the pulse compressor device with the phase of the incoming optical pulse or to maintain timing, stability or polarization characteristics within the pulse compressor device associated with the incoming optical pulse. Those skilled in the art will be familiar with examples of such active methods of optical pulse compression include using dispersion decreasing fiber, synchronized phase modulation of optical pulses with dispersive fiber, and mode-locked lasers.

One problem that may be encountered when compressing optical pulses with active devices is that high-speed electro-optics are typically required. These electro-optics are needed to align the pulse compressor device with the phase of the incoming optical pulse or to maintain timing, stability or polarization characteristics within the pulse compressor device associated with the incoming optical pulse. Using such electro-optics undesirably adds complexity to the system, generally increases the cost of such a device and inherently decreases the reliability of such a device.

Patents and publications have described the use of active devices in optical pulse compressors. For example, in an article authored by Herbert G. Winful entitled "Pulse Compression in Optical Fiber Filters" and published in Applied Physics Letters, Vol. 46, No. 6 on March 15, 1985, the author describes an active technique for compressing optical pulses using fiber nonlinearity. In particular, the use of nonlinear distributed filters embedded within optical fiber is suggested for pulse compression, which must be actively adjusted and tweaked.

In an article authored by S. V. Chernikov, M. J. Guy, and J. R. Taylor entitled "Duration-Tunable 0.2-20 Picosecond 10 GHz Source of Transform-Limited Optical Pulses Based On an Electroabsorption Modulator" and published in Optics Letters, Vol. 20, No. 23 on December 1, 1995, the authors describe another active technique for compressing optical pulses. In particular, the authors describe an optical pulse compressor requiring special tuning of a dispersive element and a modulator drive characteristic in order to produce narrow pulse widths.

In an article authored by S. V. Chernikov, R. Kashyap, and J. R. Taylor entitled "All-Fiber Dispersive Transmission Filters Based on Fiber Grating Reflectors" and published in Optics Letters, Vol. 20, No. 14 on July 15, 1995, the authors describe yet another optical pulse compressor requiring the use of active elements. The authors describe a pulse compression system that requires polarization beam splitters and matching to stabilize the stretcher/compressor and minimize polarization mode dispersion and polarization dependent loss.

Some methods of general optical pulse compression may avoid the use of active devices by relying upon passive dispersion compensation techniques. It is known that passive pulse compression of an optical pulse can be accomplished in dispersion compensators using a linearly chirped Bragg grating filter. Essentially, a linearly chirped Bragg grating filter compresses the optical pulse by altering the phase velocities within the optical pulse. In other words, the linearly chirped Bragg grating filter has a phase response (phase vs. frequency response) to chirp or impart different phase velocities on frequency components of the pulse. By chirping a signal as it passes through the filter over time via the phase response, the frequency components in the pulse shift in phase to effectively compress the pulse in the time domain.

However, while a linearly chirped Bragg grating filter alters the phase via the characteristic phase response of the filter, it is important to understand that the linearly chirped Bragg grating filter does not actually change the amplitude response (amplitude vs. frequency response) of the signal. As a result, the applicant has observed that the linearly chirped Bragg grating filter is limited in its ability to compress the pulse beyond a fundamental (transform) limit.

Those skilled in the art will appreciate that the transform limit is related to the product of the temporal pulse width (Δτ) and the spectral width (Δf) of the pulse. Above this transform limit, a linearly chirped Bragg grating filter may operate to compress the temporal pulse width back to the original pulse width at best. Further pulse compression cannot be accomplished with such a chirped device because the amplitude response of the linearly chirped Bragg grating filter is not altered. In other words, a chirped dispersion compensator usually has a substantially flat amplitude response and does not significantly filter energy from spectral regions to change the spectral bandwidth of the filtered signal. Therefore, compression using linearly chirped dispersion compensation devices (such as a linearly chirped Bragg grating) is undesirably restricted because it is ineffective at pulse compression when the pulse is already transform limited.

Patents and publications have described the use of linearly chirped dispersion compensators implemented as Bragg grating filters. For example, in U.S. Patent No. 4,953,939 entitled "Optical Fibre Transmission System" issued on September 4, 1990 to R. E. Epworth describes using a chirped Bragg grating as an equalizer or compensator to counteract chromatic dispersion. Additionally, in an article authored by F. Ouellette entitled "All-Fiber Filter for Efficient Dispersion Compensation" and published in Optics Letters, Vol. 16, No. 5 on March 1, 1991, the author describes a dispersive filter with a chirped periodic perturbation that compresses an optical pulse that is not transform limited. Similarly, in another article by F. Ouellette entitled "Dispersion Cancellation using Linearly Chirped Bragg Grating Filters in Optical Waveguides" and published in Optics Letters, Vol. 12, No. 10 on October 1987, the author describes the use of linearly chirped Bragg grating filters for dispersion compensation that also compresses an optical pulse. However, each of these patents arid publications addresses pulse compression of pulse that is not transform limited.

### SUMMARY OF THE INVENTION

In accordance with the invention as embodied and broadly described herein, in one aspect, a method is described for passively compressing a transform-limited optical pulse within the context of an optical transmission system. In general, the method begins by generating the transform-limited optical pulse at an optical source within the optical transmission system. Typically, the optical pulse is generated at a carrier frequency the same or substantially similar to a center frequency of a passive optical compressor device's notch filter. The optical pulse is then provided to a passive optical compressor device, preferably within the system's transmitter. Next, the optical pulse is passed through an optical notch filter within the passive optical compressor device to compress the optical pulse from an input pulse width to a reduced pulse width.

More particularly stated, the optical pulse may be passively shaped to the reduced pulse width as the optical pulse propagates through the optical notch filter. From a frequency domain perspective, the optical pulse may be compressed by spectrally shaping it from a first bandwidth to an increased bandwidth using only the optical notch filter. Spectrally shaping the pulse increases a predetermined frequency bandwidth (such as a 3dB bandwidth) of the optical pulse from the first bandwidth to the increased bandwidth in order to compress the pulse's temporal pulse width to the reduced pulse width. In this manner, the input pulse width may be advantageously compressed using a passive device that does not have an active element and does not respond to a control signal.

In another aspect, an apparatus is described for passively compressing an optical pulse within an optical transmission system. The apparatus essentially includes an optical source and a passive optical compressor device. The optical source generates the transform-limited optical pulse and has an output for providing the optical pulse to the passive optical compressor. In general, the passive optical compressor device reduces the temporal width of the optical pulse from the initial pulse width to a reduced pulse width in a completely passive fashion. Typically, the passive optical compressor device is a passive optical filter, such as an optical notch filter, capable of reducing the temporal width of the optical pulse by spectrally filtering out energy near a characteristic center frequency of the filter. The filter's characteristic center frequency may be substantially similar to a carrier frequency of the optical pulse. Examples of such a passive optical filter include, but are not limited to a Bragg grating filter, an etalon filter, a dielectric interference filter, or a long period grating filter. In this manner, the passive optical compressor device may compress the optical pulse without having an active element and without responding to a control signal.

Additionally, the apparatus may include an amplifier disposed between the optical source and the passive optical compressor device. This amplifier provides amplification of the optical pulse prior to compression within the passive optical compressor device. Furthermore, the apparatus may also include another amplifier optically coupled to the output of the passive optical compressor device. This other amplifier receives and amplifies the optical pulse after it has been compressed to the reduced pulse width and tends to counter the loss caused by the passive compressor device.

In yet another aspect, an apparatus is described for passively compressing optical pulses within a wavelength division multiplexed optical transmission system. The apparatus generally includes an optical source and a passive optical compressor device. The optical source has a group of wavelength division multiplexed channels, each of which provide one of the optical pulses. In other words, the optical source generates the optical pulses in these wavelength division multiplexed channels and then provides them to the passive optical compressor device. The passive optical compressor device is optically coupled to the optical source for receiving the optical pulses in the channels. Essentially, the passive optical compressor device includes an optical filter having a pass band response that includes notches substantially centered on a carrier frequency for each of the channels. The optical filter is passively operative to compress a temporal width of each of the optical pulses as they propagate through the optical filter. More particularly stated, the optical filter may be able to spectrally filter out energy near the carrier frequency for each of the channels without having an active element and without responding to a control signal.

Additionally, the apparatus may include an amplifier disposed between the optical source and the passive optical compressor device. This amplifier provides amplification of the optical pulses prior to compression within the passive optical compressor device. Furthermore, the apparatus may also include another amplifier optically coupled to the output of the passive optical compressor device. This other amplifier receives and amplifies the optical pulses after they have been compressed to the reduced pulse width to overcome the loss of the multichanneled compressor device.

### BRIEF DESCRIPTION OF THE DRAWINGS

The accompanying drawings, which are incorporated in and constitute a part of this specification, illustrate embodiments of the invention, and together with the description, explain the advantages and principles of the invention.
Fig. 1 is a block diagram illustrating part of an exemplary optical transmission system consistent with an embodiment of the present invention;
Fig. 2 is a diagram illustrating how an optical pulse is compressed by an exemplary passive compressor device consistent with an embodiment of the present invention;
Fig. 3, consisting of Figs. 3A-3C, includes graphs illustrating the input and output spectrum and amplitude response of an exemplary optical pulse compressor having an optical notch filter consistent with an embodiment of the present invention;
Fig. 4 is a block diagram illustrating part of a wavelength division multiplexed optical transmission system consistent with an embodiment of the present invention;
Fig. 5, consisting of Figs. 5A-5C, includes graphs illustrating the input and output spectrum and amplitude response of an exemplary optical pulse compressor having a multiple notch filter consistent with an embodiment of the present invention;
Fig. 6, consisting of Figs. 6A-6C, includes graphs illustrating the input and output spectrum and amplitude response of an exemplary multiplexer capable of compressing signals in each of its channels consistent with an embodiment of the present invention; and
Fig. 7 is a flow diagram illustrating steps for passively compressing an optical pulse within an optical transmission system consistent with an embodiment of the present invention.

It is to be understood that both the foregoing general description and the following detailed description are exemplary and explanatory only and are not restrictive of the invention, as claimed. The following description, as well as the practice of the invention, set forth and suggest additional advantages and purposes of this invention.

### DETAILED DESCRIPTION OF THE PREFERRED EMBODIMENTS

Reference will now be made to various embodiments according to this invention, examples of which are shown in the accompanying drawings and will be apparent from the description of the invention. In the drawings, the same reference numbers represent the same or similar elements in the different drawings whenever possible.

It is known that optical pulse compressors are useful devices for narrowing the temporal pulse width of optical pulses in optical transmission systems. In practice, most optical pulse compressors are relatively complex and are active devices requiring control signals or high-speed electro-optics. Applicant has discovered that an improved optical pulse compressor consistent with an embodiment of the present invention is a completely passive optical notch filter that does not require control signals for alignment or high-speed electro-optics. Such a passive notch filter simplifies the complexity of any optical transmission system needing optical pulse compressors and inherently increases the reliability of such a system. Furthermore, pulse width compression can be advantageously achieved below that capable with passive chirped devices because of the amplitude response (amplitude vs. frequency) of the passive notch filter. By altering the amplitude of a pulse (vs. frequency) as the pulse propagates through the device, an alternative type of temporal pulse compression is accomplished beyond that possible with simple chirped devices, such as a linearly chirped Bragg grating filter. In this manner, inexpensive and reliable optical pulse compression can be advantageously accomplished using a passive notch or band stop filter that adjusts the amplitude of the pulse (vs. frequency) without the use of active devices or high-speed electro-optics and with better compression when compared to using chirped devices.

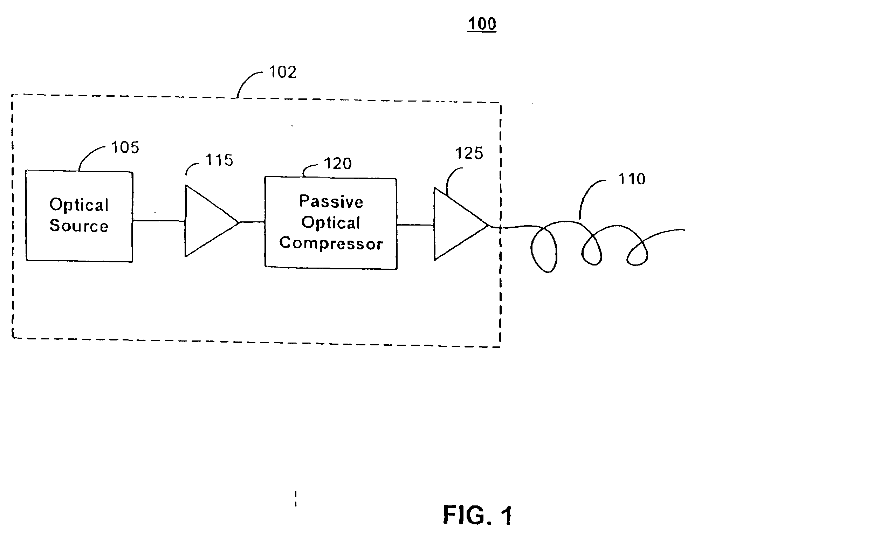

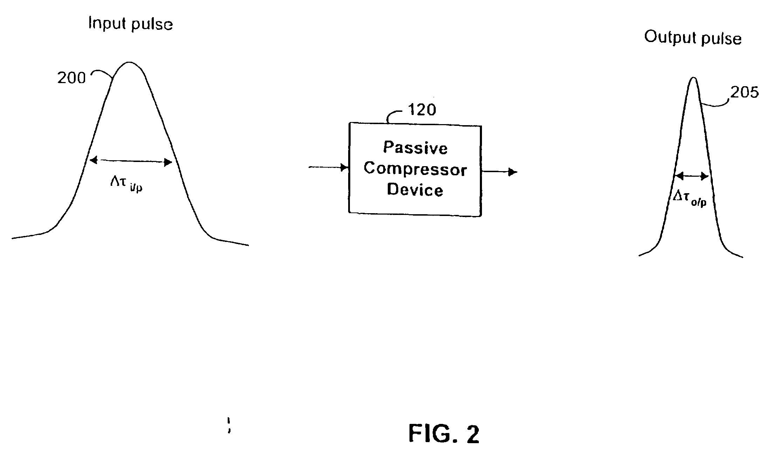

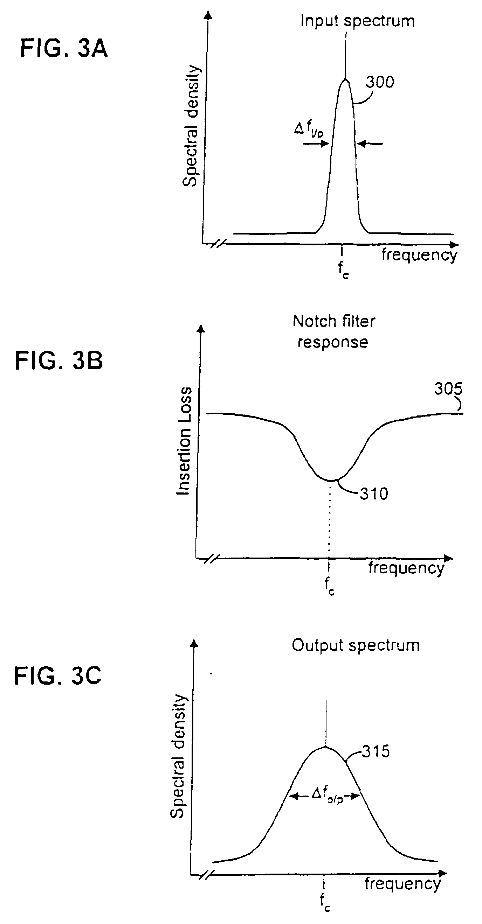

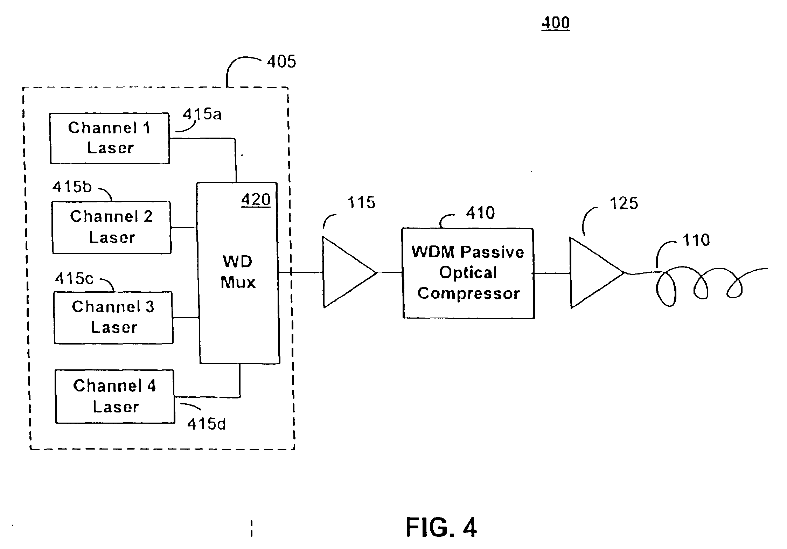

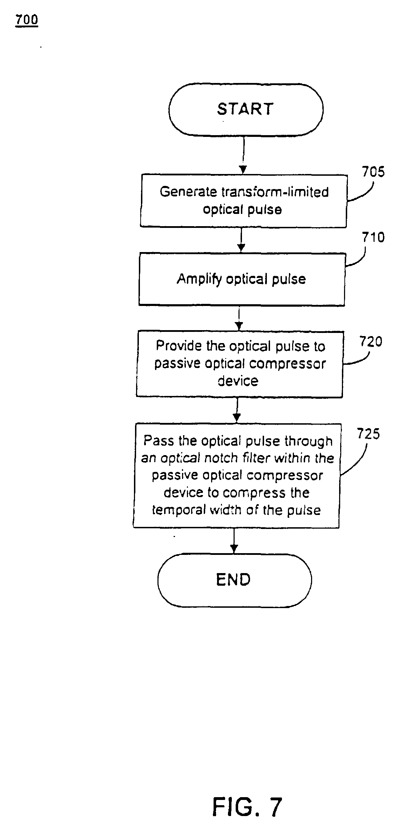

In summary, Fig. 1 is a block diagram illustrating an operating environment for an embodiment of the present invention. Fig. 2 graphically illustrates the time domain compression of an optical pulse within the optical transmission system of Fig. 1. Figs. 3A-3C graphically illustrate the frequency domain spectrum of a pulse and a passive notch filter used to compress the pulse. Figs. 4. 5A-5C, and 6A-6C illustrate a wavelength division multiplexing optical transmission system and related frequency domain spectrum of a pulse and the compressor device within such a system. Finally, Fig. 7 illustrates steps from an exemplary method for passively compressing an optical pulse in accordance with an embodiment of the present invention.

As shown in Fig. 1, a transmitting frontend 102 of an exemplary optical transmission system 100 is illustrated that passively compresses an optical pulse in accordance with an embodiment of the present invention. In general, optical transmission system 100 includes frontend transmitter 102 capable of generating compressed optical pulses. Frontend transmitter 102 has a passive optical compressor device 120 disposed within the path of an optical pulse in the system. Passive optical compressor device 120 is typically an optical filter, such as an optical notch filter or an optical band-stop filter. The filter operates to passively filter out energy near a characteristic center frequency of the filter, which is substantially similar to the carrier frequency of the optical pulse, in order to increase the spectral bandwidth of the pulse and hence reduce the temporal width of the pulse. For example, if energy at and around the carrier frequency of the optical pulse is filtered out by an optical notch filter, then less energy is spectrally concentrated at the pulse's carrier frequency and the resulting 3 dB spectral bandwidth of the pulse is increased.

In more detail, the path in optical transmission system 100 begins with an optical source 105 in frontend transmitter 102. Optical source 105, such as a data modulated laser, generates the optical pulse representing information to be transmitted within optical transmission system 100. With present electronics and electro-optics, the minimum temporal pulse width of the optical pulse is believed to be approximately 20 picoseconds or more. As previously mentioned, prior techniques for pulse compression at this transform-limited stage has been limited to active devices which are undesirably expensive and often unreliable. Furthermore, prior techniques for passively compressing the pulse any further are ineffective at this stage because the pulse is transform-limited. However, embodiments of the present invention allow the pulse to be further compressed while still remaining passive.

In the exemplary embodiment, the optical pulse is typically provided to an optical amplifier 115, such as a conventional erbium doped fiber amplifier, before being passively compressed to a desirable pulse width within passive optical compressor device 120. After being compressed, the optical pulse is typically amplified again by another amplifier 125 before continuing through an optical path (such as an optical fiber 110) within optical transmission system 100.

In the context of such a system as illustrated in Fig. 1, a more detailed discussion on passive optical compressor device 120 is supported by Figs. 2 and 3A-3C. Fig. 2 is a diagram illustrating a time domain representation of the optical pulse as it is compressed, *i.e.*, as the pulse is input into and output from passive optical compressor device 120. As the optical pulse is provided as an input pulse 200 to passive optical compressor device 120, it has a characteristic temporal pulse width of Δτ_{i/p}. The optical pulse appears as an output pulse 205 from passive optical compressor device 120, having its temporal pulse width reduced to Δτ_{o/p}. In order to accomplish such compression in the time domain, passive optical compressor device 120 typically includes a passive optical filter, which spectrally shapes or filters the amplitude of the pulse as it goes through the device. Essentially, filtering the pulse in this way alters the transform limit of the pulse by increasing its spectral width and effectively reducing the pulse's temporal width.

Additionally, by filtering the pulse in a completely passive manner, no control signals, no alignment signals, and no high-speed electro-optics are required. Therefore, passive optical compressor device 120 can be economically and reliably implemented in Optical transmission system 100.

While Fig. 2 illustrates how the optical pulse is compressed in the time domain, it is helpful to view how the optical pulse is compressed by passive optical compressor device 120 in the frequency domain. Figs. 3A-3C include graphs illustrating the input and output spectrum of the exemplary optical pulse of Fig. 2 (*i.e*., input pulse 200 and output pulse 205) and an exemplary amplitude response of passive optical compressor device 120 having a notch filter consistent with an embodiment of the present invention. Referring now to Fig. 3A, the optical pulse has an input spectrum 300 as illustrated in Fig. 3A. Those skilled in the art will appreciate that the frequency input spectrum 300 corresponds to the time domain representation of input pulse 200 (the optical pulse prior to compression).

The pulse is then filtered or spectrally shaped according to an amplitude response of the notch filter in passive optical compressor device 120. Fig. 3B illustrates an exemplary amplitude response 305 of the notch filter. A conventional chirped device used for dispersion compensation, such as a linearly chirped Bragg grating filter, has a phase response but no significant amplitude response. However, as shown in Fig. 3B, the notch filter has amplitude response 305 that passively filters energy from a spectral region 310 near a characteristic center frequency of the filter in order to increase its spectral bandwidth and hence temporally compress the pulse. In this manner, device 120 is a frequency selective filter capable of compressing the pulse while the product of the pulse's temporal pulse width and the pulse's spectral width remain constant.

It is preferable to design the center frequency of the filter to be the same or substantially similar to the carrier frequency, f_{c}, of the optical pulse, in order to reduce the temporal width of the pulse. By passively filtering energy from spectral region 310, a predetermined frequency bandwidth (such as a 3dB or 6dB bandwidth) of the pulse's output spectrum 315 is increased relative to the bandwidth of the pulse's input spectrum 300. Thus, the peak spectral energy is purposefully reduced relative to other frequencies in the spectrum, providing the effect of spectrally shaping the optical pulse.

For example, Fig. 3A illustrates the pulse's input spectrum 300 having a predetermined frequency bandwidth of Δf_{i/p}. As the pulse is filtered using the optical notch filter, the energy near the center frequency of the filter is reduced relative to energy at other frequencies. As a result, the pulse's output spectrum 315 has a predetermined frequency bandwidth of Δf_{o/p}, which is greater than the predetermined frequency bandwidth of Δf_{i/p} of the pulse's input spectrum 300. Thus, as the frequency bandwidth of the optical pulse is increased, the temporal pulse width of the optical pulse is correspondingly decreased.

Passive optical compression device 120 is preferably designed to broaden the spectral width of the optical pulse while maintaining spectral (and thus temporal) fidelity of the pulse as it is filtered. Typically, this means avoiding filtering techniques that introduce large group delay characteristics or large and abrupt changes in the device's phase response. Thus, it is preferable that the phase and amplitude response of passive optical compression device 120 are designed to give a transform-limited, compressed pulse. Those skilled in the art will appreciate that the device's bandwidth, amplitude, and phase response are preferably designed to optimize such fidelity.

In the preferred embodiment, passive optical compressor device 120 is implemented as an optical notch filter, such as a fiber Bragg grating filter, an etalon filter or a dielectric interference filter. While the applicant has not found any particular notch filter implementation to be better than others, it is believed that any commercially available passive optical notch filter would be suitable for an embodiment of the invention. Furthermore, those skilled in the art will appreciate that a fiber Bragg grating filter is often used as a dispersion compensator. However, when used in an embodiment of the present invention, the filter is used simply to passively shape the pulse, which increases its spectral bandwidth and hence reduces its temporal pulse width. Additionally, it may be desirable to use a long period grating filter if the output pulse width is desired to be a picosecond or less.

In these embodiments, the device 120 has a center frequency substantially the same as the carrier frequency of the optical pulse. In addition to the fact that the filters in embodiments of the present invention have a significant amplitude response, these filter implementations are each completely passive and do not require tweaking or tuning to compress the temporal pulse width of an optical pulse being filtered by the respective device. Those skilled in the art will be familiar with various types of passive optical filter designs, such as the fiber Bragg grating, the etalon filter, the dielectric interference filter and the long period grating filter that are suitable to implement such a frequency selective filter. The exact type of filter to use will depend upon the exact amount of pulse compression desired while maintaining pulse fidelity.

If the spectral width (*e.g.*, spectral region 310) filtered by device 120 is increased by design, the temporal pulse width of the pulse's output will be further narrowed. However, there is a practical limit on the achievable temporal pulse width or pulse compression ratio (Δτ_{i/p}/Δτ_{o/p}). This limit exists because the amplitude of the optical pulse will be increasingly attenuated as the rejection bandwidth of the device (*e.g.*, the predefined spectral region 310 rejecting signals as they attempt to propagate through the notch filter in device 120) is widened by design. Using amplifier 115 and amplifier 125 at the input and output of device 120, the loss due to signal attenuation will be mitigated. However, those skilled in the art will appreciate that there will be a fundamental limit on the pulse compression ratio due to a required optical signal-to-noise ratio within system 100.

In summary, passive optical compression device 120 is used to compress the temporal pulse width of a transform-limited optical pulse by spectrally filtering the pulse without using any external control signals or alignment signals and without the use of high-speed electro-optics. Typically, device 120 is implemented using a completely passive optical notch filter having a significant amplitude response. Additionally, device 120 typically has a center frequency the same or substantially similar to the carrier frequency of optical pulses within system 100. As a result, the inventor believes that device 120 is an inherently more reliable and more cost-effective mechanism for optical pulse compression than has been used in the prior art.

In another embodiment of the present invention, the operating environment is a wavelength division multiplexed (WDM) optical transmission system. Fig. 4 is a block diagram illustrating part of the wavelength division multiplexed optical transmission system 400 consistent with an embodiment of the present invention. As shown in Fig. 4, optical pulses are generated by an optical source 405, which is essentially a component or a group of components that provide optical pulses within a series of wavelength division multiplexed channels in system 400. In the exemplary embodiment shown in Fig. 4, optical source 405 includes data modulated lasers for each wavelength channel of system 400 (*e.g.*, channel 1 laser 415a, channel 2 laser 415b. channel 3 laser 415c, and channel 4 laser 415d). Once the lasers generate the optical pulses in each channel, a wavelength division multiplexer (WD Mux) 420 effectively combines the optical pulses from each channel into a single optical path. More particularly, WD Mux 420 multiplexes the optical pulses together being separated in wavelength from each other.

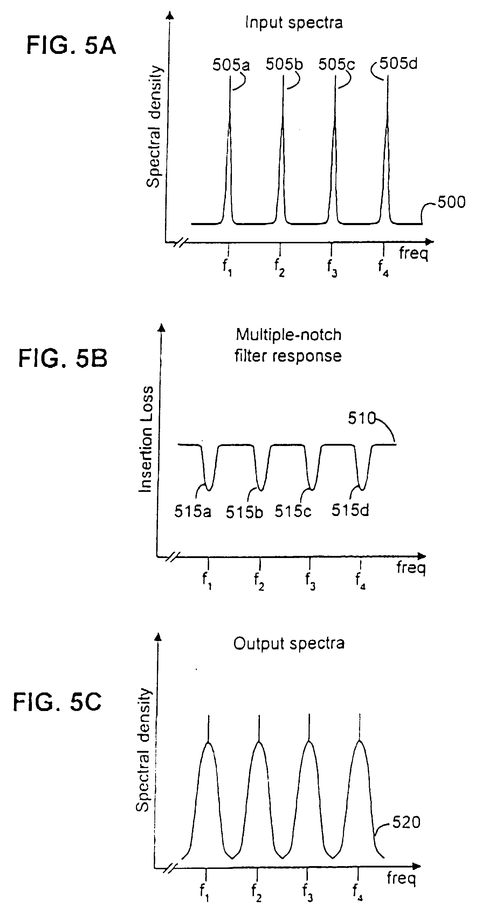

After the optical pulses are generated and multiplexed together, the optical pulses are typically amplified by amplifier 115, temporally compressed by a WDM passive compressor device 410 before being amplified again by amplifier 125. WDM passive compressor device 410 is similar to device 120 in that both are able to compress the temporal pulse width of an optical pulse without the use of control or alignment signals and without the use of high-speed electro-optics. The major difference between WDM passive compressor device 410 and device 120 from Fig. 1 is their respective filtering responses. In other words, device 410 can compress the temporal pulse width of multiple pulses, each of which have a different wavelength, instead of only a single pulse (as done by device 120). This difference is further highlighted in Figs. 5A-5C.

Figs. 5A-5C include graphs illustrating the input and output spectrum of an exemplary series of optical pulses (each of which are separately generated and wavelength multiplexed together) and an amplitude response of device 410 that compresses these optical pulses consistent with an embodiment of the present invention. Referring now to Fig. 5A, the optical pulses are generated for each channel and then multiplexed by WD Mux 420. The multiplexed pulses collectively have an input spectrum 500 as illustrated in Fig. 5A. The multiplexed pulses are then filtered or spectrally shaped according to an amplitude response of device 410. Fig. 5B illustrates an exemplary amplitude response 510 of device 410. In the preferred embodiment, device 410 has a multiple notch optical filter capable of selectively filtering out energy near characteristic notch frequencies, such as f1, f2, f3, and f4. As shown in Fig. 5B, device 410 passively filters energy from spectral regions 515a-d near each of the characteristic notch frequencies (f1, f2, f3 and f4). It is preferable to design the notch frequencies of device 410 (*e.g.*, the multiple notch filter) to be the same or substantially similar to the carrier frequencies of the optical pulses in channels of system 400. By passively filtering energy from each spectral region 515a-d, a predetermined frequency bandwidth (such as a 3dB or 6dB bandwidth) of the pulse's output spectrum 520 is increased relative to the bandwidth of the pulse's input spectrum 500 as shown in Fig. 5C. This effectively compresses the temporal pulse width of each wavelength specific channel.

In yet another embodiment of the invention, an existing passive element within the pulse's optical path is capable of compressing the temporal pulse width of the pulse. In this manner, the need for a separate compression device may be advantageously eliminated when a passive element (such as an optical multiplexer, an optical de-multiplexer, or an optical coupler) can incorporate passive filtering characteristics. For example, WD Mux 420 may have a characteristic amplitude response that enables it to filter or spectrally shape optical pulses in each channel as the pulses are generated and multiplexed into a single optical path. Thus, the function of WD multiplexing and temporal pulse compression are advantageously performed by a single device, such as WD Mux 420.

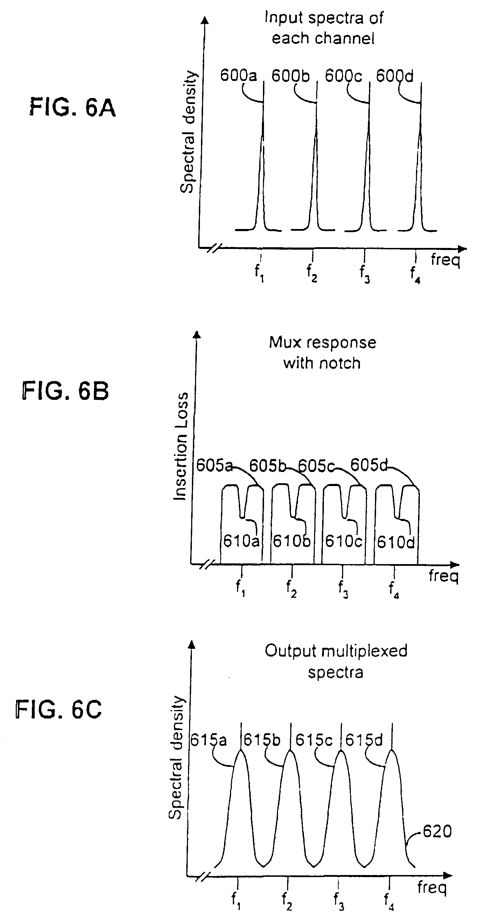

To illustrated this point in more detail, Figs. 6A-6C show the input and output spectrum and amplitude response of an exemplary multiplexer (such as WD Mux 420) capable of compressing signals in each of its channels consistent with an embodiment of the present invention. Referring now to Fig. 6A, the optical pulses 600a-d are generated for each channel and then provided to WD Mux 420 prior to being multiplexed. The pulses in each channel are then filtered or spectrally shaped according to the amplitude response 605a-d for each channel of WD Mux 420. Fig. 6B illustrates the exemplary amplitude responses 605a-d within each channel of WD Mux 420. In the preferred embodiment, WD Mux 420 has an optical notch filter at each channel capable of selectively filtering out energy near the carrier frequency of that particular channel, such as f1, f2, f3, and f4. As shown in Fig. 6B, WD Mux 420 passively filters energy from spectral regions 610a-d near each of the carrier frequencies (f1, f2, f3 and f4). In a single channel, pulse 505a generated by channel 1 laser 415a is filtered according to amplitude response 605a prior to being multiplexed with the other pulses being fed into WD Mux 420. The notch or spectral region 610a near carrier frequency f1 passively filters energy from spectral region 610a and increases the frequency bandwidth of pulse 600a. This, in turn, reduces the temporal pulse width of pulse 600a to become pulse 615a in output spectrum 620 as shown in Fig. 6C. Those skilled in the art will appreciate that the pulses 600b-d in the other channels are concurrently and similarly filtered and compressed as they are multiplexed into output spectrum 620.

In summary, simple passive optical pulse compression can be achieved not only with a simple, relatively inexpensive, and reliable passive filtering component (*i.e.*, the passive compression device), but also by incorporating passive filtering characteristics into another passive element within an optical transmission system. In this manner, transform-limited pulses can be compressed to increase data rates without increasing the complexity and decreasing the reliability of optical transmission systems incorporating an embodiment of the present invention.

Another aspect of the present invention is a method for passively compressing an optical pulse. Fig. 7 is a flow diagram illustrating exemplary steps from a method passively compressing an optical pulse within an optical transmission system consistent with an embodiment of the present invention. As shown in Fig. 7, the method 700 begins at step 705 where an optical pulse is generated. In the example illustrated in Fig. 1, optical source 105 generates the transform-limited optical pulse. At this point, there is little to no dispersive spreading of the pulse. Therefore, the prior art techniques for passive pulse compression are not available. At step 710, the optical pulse is typically amplified although some embodiments of the invention do not amplify the pulse prior to passively compressing it. In the exemplary embodiment, amplification is preferably accomplished using a conventional erbium-doped optical amplifier.

After generation of the pulse, the pulse is provided to a passive optical compressor device at step 720. In the exemplary embodiment, the passive optical compressor device is a passive optical notch filter capable of filtering energy out of a spectral region near the filter's center frequency. Finally, at step 725, the optical pulse is passed through the passive optical notch filter to compress the temporal width of the pulse due to the significant amplitude response of the filter. In other words, the pulse is filtered by the compressor device to increase the spectral width of the pulse and hence compress the temporal width of the pulse. More particularly stated, the optical pulse is spectrally shaped in the frequency domain by the notch filter at step 725 from a narrower frequency bandwidth to an increased frequency bandwidth. The widening of the pulse in the frequency domain translates to a narrowing of the pulse in the time domain. Thus, this compression of the optical pulse is advantageously accomplished without substantially chirping the pulse, without the expense and complexity of high-speed electro-optics, and without the need for any other signal or feedback being provided to the passive optical compressor device (such as control signals, driving signals or alignment signals).

In summary, an exemplary embodiment of the present invention is part of an optical transmission system and includes an optical source and a passive optical compressor device. As previously mentioned, applicant has discovered that such a passive optical compressor device consistent with an embodiment of the present invention is a completely passive device that does not require control signals for alignment or high-speed electro-optics. Such a passive device is typically implemented as an optical notch filter or optical band-stop filter having a significant amplitude response. As a completely passive device, it simplifies the complexity of any optical transmission system needing optical pulse compressors and inherently increases the reliability of such a system. In this manner, an inexpensive and reliable optical pulse compression of a transform-limited pulse can be advantageously implemented using a passive notch or band stop filter without the use of active devices or high-speed electro-optics.

It will be apparent to those skilled in the art that various modifications and variations can be made to the system and method of the present invention without departing from the spirit or scope of the invention. For example, the passive optical compression device depicted in the figures is intended to be exemplary of preferred embodiments. The precise passive optical filtering structure within such a compression device may readily be altered by one of ordinary skill in the art to obtain the equivalent compression device as disclosed herein without departing from the spirit or scope of this invention. Furthermore, while illustrated as part of a transmitter on the front end of a system, the present invention contemplates using such an optical pulse compression device as part of a regenerative or repeater segment or module within the system. Thus, the present invention covers the modifications and variations of this invention provided they come within the scope of the appended claims and their equivalents.

## Claims

1. A method for passively compressing a transform-limited optical pulse within an optical transmission system, comprising the steps of:
generating the transform-limited optical pulse at an optical source within the optical transmission system, the transform-limited optical pulse having a characteristic input pulse width;
providing the optical pulse to a passive optical notch filter, and
passing the optical pulse through the passive optical notch filter to compress the transform-limited optical pulse from the input pulse width to a reduced pulse width.

2. The method of claim 1, wherein the passing step further comprises passively shaping the optical pulse to the reduced second pulse width as the optical pulse propagates through the optical notch filter.

3. The method of claim 2, wherein the passively shaping step further comprises spectrally shaping the optical pulse from a first bandwidth to an increased bandwidth using only the optical notch filter.

4. The method of claim 3, wherein the spectrally shaping step further comprises passively increasing a predetermined frequency bandwidth of the optical pulse from the first bandwidth to the increased bandwidth in order to compress the input pulse width to the reduced pulse width.

5. The method of claim 1, wherein the generating step further comprises generating the optical pulse having a carrier frequency substantially similar to a center frequency of the optical notch filter.

6. The method of claim 1, wherein the passing step further comprises compressing the optical pulse to the reduced pulse width without using an active element and without responding to a control signal.

7. An apparatus for passively compressing a transform-limited optical pulse within an optical transmission system, comprising:
an optical source having an output and being capable of providing the transform-limited optical pulse on the output, the transform-limited optical pulse having a temporal width of an initial width; and
a passive optical compressor device optically coupled to the optical source for receiving the transform-limited optical pulse and being passively operative to spectrally filter an amplitude of the transform-limited optical pulse to reduce the temporal width from the initial width to a reduced width.

8. The apparatus of claim 7, wherein the passive optical compressor device is a passive optical filter capable of altering the spectral width of the optical pulse which then reduces the temporal width of the optical pulse.

9. The apparatus of claim 8, wherein the passive optical filter is a passive optical notch filter capable of spectrally filtering out energy near a characteristic center frequency to reduce the temporal width of the optical pulse.

10. The apparatus of claim 9, wherein the passive optical notch filter is a Bragg grating filter.

11. The apparatus of claim 9, wherein the passive optical notch filter is a etalon filter.

12. The apparatus of claim 9, wherein the passive optical notch filter is a dielectric interference filter.

13. The apparatus of claim 9, wherein the passive optical notch filter has the characteristic center frequency substantially similar to a carrier frequency of the optical pulse.

14. The apparatus of claim 7, wherein the passive optical compressor device compresses the optical pulse without using an active element and without responding to a control signal.

15. The apparatus of claim 7 further comprising a first amplifier optically coupled to the passive optical compressor device for receiving and amplifying the optical pulse having the reduced pulse width.

16. The apparatus of claim 15 further comprising a second amplifier disposed between the optical source and the passive optical compressor device, the second amplifier providing amplification of the optical pulse prior to compression within the passive optical compressor device.

17. An apparatus for passively compressing a plurality of transform-limited optical pulses within a wavelength division multiplexed optical transmission system, comprising:
an optical source having a plurality of wavelength division multiplexed channels, each of the channels providing one of the transform-limited optical pulses; and
a passive optical compressor device optically coupled to the optical source for receiving the transform-limited optical pulses in the channels, the passive optical compressor device including a optical filter having an amplitude response including of a plurality of notches substantially centered on a carrier frequency for each of the channels, the optical filter being passively operative to compress a temporal width of the transform-limited optical pulses as each of the transform-limited optical pulses propagate through the optical filter.

18. The apparatus of claim 17, wherein the optical filter is capable of spectrally filtering out energy near the carrier frequency for each of the channels.

19. The apparatus of claim 18, wherein the passive optical compressor device compresses the optical pulses without having an active element and without responding to a control signal.

20. The apparatus of claim 19 further comprising a first amplifier optically coupled to an output of the passive optical compressor device for receiving and amplifying the optical pulses having the reduced pulse width.

21. The apparatus of claim 20 further comprising a second amplifier disposed between the optical source and the passive optical compressor device, the second amplifier providing amplification of the optical pulse prior to compression within the passive optical compressor device.

22. A method of providing a narrow pulse comprising generating a transform-limited optical pulse at an optical source within an optical transmission system, the transform-limited optical pulse having a characteristic input pulse width and passing the optical pulse through a passive optical compressor to compress the pulse to a reduced pulse width.

23. Apparatus comprising an optical source capable of providing a transform-limited optical pulse having a temporal width of an initial width at an output thereof, and a passive optical compressor optically coupled to the source for receiving a transform-limited optical pulse and adapted to compress the temporal width from the initial width to a reduced width.
